# EUROPEAN PATENT APPLICATION

(11) **EP 2 194 687 A1**
(43) Date of publication of application: **09.06.2010**
(21) Application number: 08021026.3
(22) Date of filing: 04.12.2008
(51) Int. Cl.: H04L 29/06, H04N 7/24, H04L 29/08

(54) **Combined rendering of digital media objects**

(71) Applicant: T-Mobile International AG, 53227 Bonn (DE)
(72) Inventor: Knight, Phil, Esher KT10 9PG (GB); Newman, Chris, Royston Hertfordshire SG8 9BN (GB)
(74) Representative: COHAUSZ DAWIDOWICZ HANNIG & SOZIEN

(57) **Abstract**

This invention relates to a method for combined rendering of a first and a second digital media object on a client system as well as to a client system and a computer program product for executing the method, the client system being in communication with a server system over a network, the first media object being held on the server system for download to the client system in a data stream, the second media object being locally stored on the client system, the method comprising the steps of receiving a user input relative to a first media object provided on the server system, establishing a communications channel between the server system and the client system for transmitting the first media object from the server system to the client system, accessing the media object on the server system, transmission of the first media object representing data from the server system to the client system via the communications channel in a data stream, storing the data in a stream buffer on the client system, rendering the first media object on the client system when a predetermined amount of data has been transmitted into the buffer, whereby the second media object is rendered on the client system when the user input is received.

## Description

The present invention relates generally to the rendering of streamed media objects on a client system, and more particularly to a method and a computer program product for combined rendering of a first locally prestored and a second streamed media object on a client system as well as a client system with means for such combined rendering.

In the current state of the art streaming in particular on the internet is a commonly used method to view visual content and to listen to audio content. There are numerous protocols that can be used for this, and which transmit the data in a stream, via a communications channel such that the data arrives at the client system and is displayed soon after it has been received, after having been buffered for a period long enough to compensate for any vagaries in the communication medium or stream dynamics. Whilst there is a delay for streaming in particular similar delays can occur for access to any form of media, and so this technique whilst of most use to video or audio streaming can be applied to any other remote access of media where there is a delay caused by a combination of protocol and communications channel.

An alternative method to view or to listen to media objects displayed or played on the client system is to download these media objects in their entirety and to hold the content locally at the client system on which it is to be rendered. When the user then elects to view or to listen the content it is accessed directly from the memory of the client system, typically a local disk drive, some form of RAM (Random Access Memory) or non volatile memory. As these media objects are locally stored on the client system the form of consumption of their data can be referred to as 'offline' because there is no need to establish a connection to the internet for accessing and rendering these media objects. In the case of 'offline' media objects the delays are extremely small, because the only communications involved are wholly within the client system and can thus run at very high rates typically giving an appearance of the media being instantaneously available to the end user.

The conventional data consumption of the streamed and offline video and/or audio content has several disadvantages. Referring to a streaming process, i.e. the transmission of data from a server system within a communication network like the internet via a communications channel in a data stream, this form of data retrieval leads to a noticeable period between user's indication that he wishes to see and/or hear a particular piece of streamed content and the point this content becomes available for rendering on the client system. This delay is typically caused by:
- the need to establish a communication path to the equipment hosting the content, particularly to the server system on which the streamed media object is stored and hold for download in a data stream;
- for the client system and server system to agree to a protocol and the attributes of the communications channel;
- for the server system to supply sufficient data to the client system such it can buffer an amount that can isolate the user experience from any vagaries on the overall communications process or other stream dynamics.

The delay can amount to several seconds in particular if low powered client systems and communications systems with high round trip times and/or low bit rates are involved, this can be the case particularly in mobile networks like GPRS (General Package Radio Service) or UMTS (Universal Mobile Telecommunication System) in the case of which the client system is a cellular mobile phone.

There is a similar though less pronounced delay with access to all media over an external communications channel.

Offline viewing of previously downloaded and locally stored content does not suffer from the potentially lengthy delays outlined above that streaming does, but does have the disadvantage that the entire contents of the video, audio or audio-visual item have to been downloaded on a client system and held locally thereon. This may be acceptable for some elements of content where the user is prepared to wait whilst they are downloaded and then subsequently view them offline. However, in the case where the media objects are required for immediate viewing there is a delay whilst it is downloaded.

This delay is aggravated when the communication channel involved is of a lower bit rate and/or a long round trip time.

A further method is to speculatively download the audio, video or audio-visual onto the client system in advance of the user requesting it. This might be the case for instance for a news clip with audio-visual data where user behaviour has clearly indicated a propensity to consume news on a regular basis. When the user then indicates that he wishes to see or listen to the media object it can be displayed immediately from a local file. The disadvantages of speculative downloads are that the content requested may never be accessed by the user, and consequently there may be a substantial amount of data to be downloaded in advance when in fact only a fraction of it is ever accessed in the end by the user.

Alternatively, if the user is downloading on demand then there is a delay while the entire contents of the file are downloaded, invariably this is longer than the delay of a stream start.

In view of various disadvantages of the methods for consuming media data as outlined above, it is an object of this invention to enhance user's experience when he is requesting a media object on a server system that has to be downloaded to a client system via a communications channel and an agreed protocol, and to make the time delay from the point when the user indicates that he wishes to see some video or audio content to the point where the content first becomes available for rendering, useable and valuable for the user.

This object is solved by the features of independent claims 1, 19 and 21. Preferred embodiments of the invention are subject of their dependent claims.

According to an overall aspect of the invention its basis is to use a hybrid mechanism consisting of a joint use of downloaded adverts and streaming to provide for a better user experience than would have been achieved otherwise. It also allows for the monetisation of context sensitive material.

According to the invention, in particular, there is provided a method for combined rendering of a first and a second digital media object on a client system, the client system being in communication with a server system over a network, the first media object being hold on the server system for download to the client system in a data stream, the second media object being locally stored on the client system, the method comprising the steps of receiving a user input relative to a first media object provided on the server system, establishing a communications channel between the server system and the client system for transmitting the first media object from the server system to the client system, accessing the media object on the server system, transmission of the first media object representing data from the server system to the client system via the communications channel in a data stream, storing the data in a stream buffer on the client system, rendering the first media object on the client system when a predetermined amount of data has been transmitted into the buffer, whereby the second media object is rendered on the client system after the user input is received.

In this connection the term 'media object' means any kind of media content, particularly an audio, video or audio-visual item. The client system can be a personal computer being connected with the internet to a server system on which media content is hold, or it can be a mobile device, in particular a cellular mobile phone, being connected to a server system via a GPRS or UMTS network.

According to the invention it is advantageous to download a media object that could be of interest or relevant for the user in advance. At the time this media object is prestored locally in a memory of the client system the user has not indicated interest in viewing or listing to a special media object that has to be downloaded in a data stream yet. According to the invention it is provided that after this interest is indicated to the client system and it receives a user input requesting access to this first media object a second media object is rendered on the client system. In particular, an audio item is played or a video item is displayed on a display device of the client system. Thus, the delay in rendering the streamed media object is bridged giving the user valuable or delightful information, while he is waiting for the first media object becoming available for rendering.

In a preferred embodiment the second media object is downloaded from a server system when a hypertext object comprising a link to the media object is requested from the client system. The hypertext object can be an internet website for instance with a lot of links to different media objects stored on one or different server systems.

Further preferably, a set of user behaviour, profile and/ or history data can be used via an algorithm to determine what media objects linked in the hypertext object may be of interest to the user and therefore worth speculatively downloading.

According to a further preferred embodiment, the user input can be entered by a user pressing a button on an input device of the client system, thus indication interest in and requesting access to a special media object that has to be downloaded in a data stream.

Further preferably, the second media object can be rendered immediately after the user input is received and at least while the communication channel is established. This enables the user to get valuable or delightful information while he is waiting for the first media object becoming available for rendering. He can regard or to listen to the second media object without becoming impatient as it is loaded from the local memory of the client system as 'offline data' and rendered immediately. In this advantageous embodiment of the invention, the time needed for accessing the first media object on the server system, i.e. the verification of its availability on the server system, and the time needed for establishing a communications channel to the server system is bridged.

Most preferably, the second media object is continuously rendered while the first media object representing data are transmitted in a data stream to the client system. Accordingly, it is advantageously possible to bridge the time needed to download and buffer a certain amount of data of the first media object so that it can be played or displayed on the client system without any vagaries of connection and stream dynamics.

In a further advantageous embodiment, the second media object is rendered, rendered again or continued when the data stream is interrupted. An interruption can occur due to technical problems, for instance if the communications channel brakes down and the stream buffer runs out of data. A rendering of the second media object enables the user to get valuable or delightful information while he is waiting for the first media object being continued.

Preferably, the second media object is a static or dynamic advert with audio and/or video content. Thus, the user can be informed about new products and actual customs probably being of interest for him. A static advert has the advantage that its rendering can be terminated at every time, i.e. immediately after sufficient data of the first media object is received, in contrast to a dynamic advert which must be broken or interrupted when the certain amount of data of the first media object is received. It then can be continued after the first media object has terminated. A dynamic advert, however, can provide more information as it can contain audio and/ or video content. Additionally, its content provides more information in a more delighted manner.

In a further embodiment, the second media object is rendered for a predetermined duration whereby the duration can be determined. Accordingly, it is advantageously possible, in particular in the case of a static advert, to render is as long as time is needed for buffering a sufficient amount of data of the first media object to make it available for rendering.

Further preferably, rendering of the second media object is terminated, broken or interrupted when enough data of the first media object is transmitted to the client system to enable rendering of the first media object at least for a few seconds. This ensures that the requested first media object is rendered immediately after it becomes available and that the user does not need to wait unnecessarily. Additionally, in case of a dynamic advert and if its rendering has been interrupted, it can be continued when the rendering of the first media object becomes interrupted or terminates. Accordingly, it is possible to provide the user the second media object in its entire length.

In an advantageous embodiment, a suite of media objects, particularly a suite of adverts, is downloaded from at least one server system to the client system and stored locally on the client system previous to the reception of the user requesting access to the first media object that must be downloaded to the client system via a data stream. This can be done immediately when the user requests a hypertext object that contains a link to the first media object or at any other time the user requests media content over the internet. The locally stored media objects and adverts respectively are hold on the client system for rendering later on when a streamed media object is requested. Each media object can provide information to and about a special product or theme. Thus, the second media object can be selected from a wide spectrum of different information available for rendering on the client system when the first media object is requested.

Preferably, attributes can be allocated to the media objects. In particular, these attributes may have time expiry information, duration information and/ or information about a topic relative to the subject matter of the individual media object. Thus, it is possible that the second media object can be selected from the suite of media objects according to a special criteria.

It is preferred, that the media objects of the suite of media objects have different durations so that the second media object can be selected from the suite on the basis of its duration. In particular, the duration may be that its rendering is completed when the predetermined amount of data of the first media object has been transmitted into the buffer. The time needed to transmit the predetermined amount of data may vary depending on the streaming speed, communication quality and vagaries. According to the invention it is ensured that the second media object is not longer than necessary to bridge the communications set up and the beginning of the streaming process.

Additionally or alternatively, the second media object can be selected from the suite of locally stored media objects on the basis of a topic relative to the subject matter of the individual media item. Thus, it is possible to provide always a media object according to the interest or desire of the user.

Additionally or alternatively, the second media object can be selected from the suite of locally stored items on the basis of time expiry information relative to the subject matter of the media object. Thus, it is possible to provide always an actual media object.

Additionally or alternatively, the second media object can be selected from the suite of locally stored items on the basis of criteria deposited on the client system or a server system. In particular, these criteria can refer to the individual interest, activity or behaviour of the user when he moves through the internet.

In a further preferred embodiment of the invention the media objects of the suite of locally stored media items and their attributes are listed up in a schedule. The schedule can be searched for the selection of the second media object to be rendered. This ensures to find an adequate media item quickly amongst the suite of media objects.

According to a further aspect of the invention, there is further provided a client system on which a combined rendering of digital media objects, in particular the rendering of a streamed first media object and an offline second media object, is achieved. The client system being in communication with a server system over a network, the first media object being hold on the server system for download to the client system in a data stream, the second media object being locally stored on the client system in a storage means, the client system comprising means for receiving a user input relative to a first media object provided on the server system, means for establishing a communications channel between the server system and the client system for transmitting the first media object from the server system to the client system, means for accessing the media object on the server system, means for transmitting the first media object representing data from the server system to the client system via the communications channel in a data stream, a stream buffer for storing the data on the client system, means for rendering the first media object on the client system when a predetermined amount of data has been transmitted into the buffer, and means for rendering the second media object when the user input is received.

In particular the client system is arranged in that the method according to the first aspect of the invention can be executed on it.

In a preferred embodiment, the client system is a mobile device, in particular a cellular mobile phone.

According to a third aspect of the invention, there is further provided a computer program product for combined rendering of a first and a second digital media object on a client system, the client system being in communication with a server system over a network, the first media object being hold on the server system for download to the client system in a data stream, the second media object being locally stored on the client system in a storage means, the computer program product comprising a computer program being stored in the storage means and comprising software means to perform the method according to the first aspect of the invention when it is executed on the client system.

These and other objects, features and advantages of the present invention will become more apparent from reading of the following detailed description of preferred embodiments and accompanying drawings.
- Fig. 1: shows a typical information flow for the access of streamed content from a remote content server and its display to the requesting user according to the state of the art,
- Fig. 2: shows an information flow for the access of streamed content from a remote content server and the intervening display of advertising or other material content according to the invention,
- Fig. 3: shows an information flow for the access of streamed content from a remote content server, the intervening display of advertising or other material and switchover at an editorially acceptable time according to the invention.

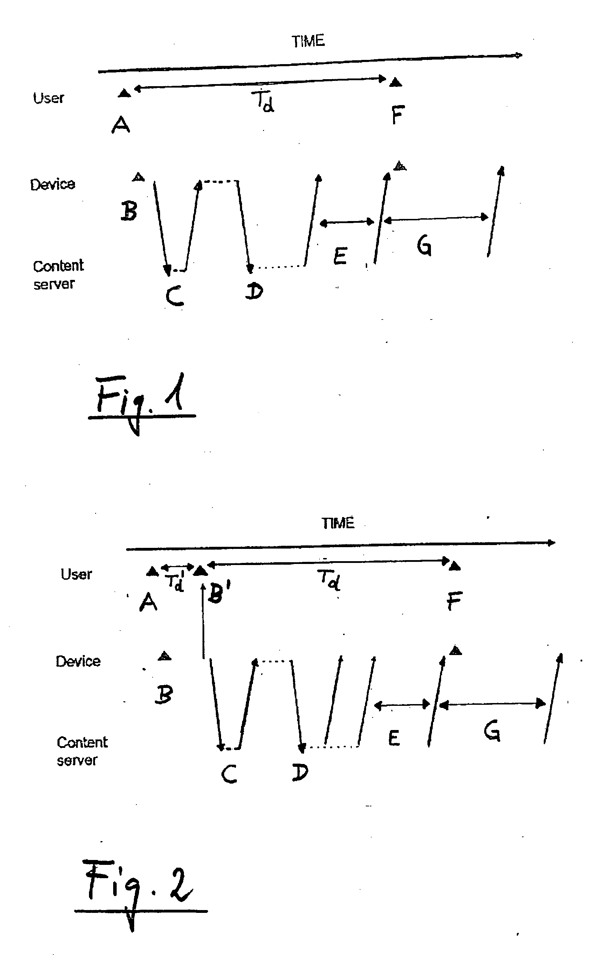

A typical sequence flow of the data retrieval when a streamed media object is requested is shown in fig. 1 which indicates delays that can occur.

Fig. 1 illustrates the individual steps taken when a certain media object shall be rendered on the client system, generally indicated as 'device', in relation to a time line, the media object being held on a server system for a streamed download, the server system being generally indicated as 'content server.

At a first point of time A a user requests a specific content by pressing a button on an input device of the client system, in particular a key of a keyboard or of a human interface device. The device receives the request and sets up a communications channel to the media object, generally referred to as 'content', at a second point of time B. The communications channel is then set up via an agreed protocol at point C. After that the content is requested, point D, and the stream begins sending sufficient data of the media object to fill the buffer of the device at point E. When the stream buffer has filled the device begins to render the content to the user at a third point of time F. The time interval between the first point of time A and the third point of time F is indicated with Td representing the total delay between the user initiated request and the first point the streamed content becomes available for rendering on the client system. After the rendering of the prestored offline content has started the stream continues sending the remainder of the content to the client system, point G. Fig. 1 indicates the processing time within the client system/ device and the server system/ content server.

According to the invention and as illustrated in fig. 2 the user requests a specific content at a first point of time A. The client system/ device receives the request and accesses prestored advertising content, point B, and immediately renders it. The rendering begins at a second point of time B'. The delay between the first point of time A and the second point of time B' is indicated with Td' representing the delay between the user initiated request and the start of downloaded prestored content. This delay is hardly visible to the end user as it is too short to be recognized.

The device then sets up a communications channel to the content server at point B. After the communications channel is established the client server and the content server agree to a certain protocol, point C. Then, the specific content is requested, point D, and the stream begins sending sufficient data to fill the buffer of the device, point E.

When the stream buffer has filled the device switches from stored content to requested content and renders it to the user at a third point of time F. After that streaming of the content continues sending the remainder or the content to the device, indicated by G.

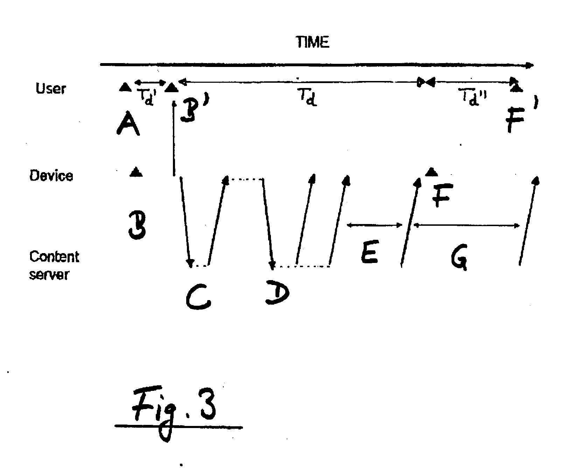

The method according to fig. 3 differs from the process of fig. 2 in that the device continues to buffer the stream, point F, and only effects switchover from the stored content at the next point F' of editorial integrity. Td is the delay between the second media object rendered and when the requested content could be rendered. Td" is the delay to the next point of editorial integrity. Within the period, indicated by G, the stream of the content continues sending the remainder of the content to the device.

According to the invention it is also possible that two or more media objects and adverts respectively may be rendered, when the communications channel is set up and data of the first media object is received.

Advertising is a well understood mechanism to make potential customers aware of e.g. products or services that they may choose to consume. In general the more accurately an advert can be targeted to the known interests of the customer the more likely the customer is to take advantage of whatever service or product is being sold or presented.

The invention seeks to combine the benefits from a performance and customer experience perspective of using a prestored advert in the same or different media as the stream or media being selected to both make the customer aware of the advertised offers and also to improve the users experience by occupying what otherwise would have been 'dead' time whilst the customer was waiting for the inevitable stream set up and buffering delays, or other connection delays in the case of non streamed medina.

Within the overall process of the invention a client function in the client system will previously have contacted a server system and been sent through a suite of adverts relevant to the customer. These are stored locally at the client system and have time expiry marked on them indicating when they become unacceptable for use, or some other selection of attributes that indicates their relevance.

When the customer attempts through keystroke or other action to access a piece of media, then in the delay to connect and retrieve the media or article, regardless of the protocol being employed, a relevant advert with the same or different media type is shown to the customer, when the advert has completed the requested media is then displayed immediately to the customer. The length of time given to the display or playing of the advert is designed to be such that it lasts until the requested media is available for subsequent immediate rendering to the customer.

Alternatively, the advert may be cut short at the point when the requested media is available, as shown in fig. 2.

Alternatively, there may be points in the advert where a cessation has editorial integrity and these could be used for the switchover to the stream as shown in fig 3.

The choice of the advert to be played is based on an algorithm, for instance on the known preferences of the customer, or on the current activity of the customer, and a search through the locally downloaded adverts for one in a category that best fits the actions of the customer at that time, as far as they can be determined through local or remote access.

Alternatively, the schedule of adverts shown can be based on an algorithm that is held locally at the client system but defined by the network or service provider.

Alternatively, the schedule of adverts shown can be based on an algorithm that is held by the network or service provider and accessed at the beginning of the whole process.

At a more detailed level the process may function as described below.

In a first embodiment a connection is initiated to the requested media data source, typically on the internet, the area of the client system memory where adverts are stored is then searched and if an advert is found that meets the criteria of a defined algorithm, it is then rendered immediately on the client system to the user. A part of the algorithm is, that only time relevant adverts are presented, and that if an advert is no longer accurate or were otherwise out of date then it is not presented. Whilst this is being rendered on the client system to the user a connection to the requested source media is made and sufficient of the media is received such that it can be rendered. At this point on the basis of a configurable option the advert is either halted immediately in favour of the display of the requested media or the advert is completed after which the requested media is then immediately played or the advert is halted at the next point defined as having editorial integrity. In any case the user has the experience that the traditional delay involved with recovering media is removed all be it by the display of a non requested advert. The essence of this invention is the improvement of the user experience through displaying material held locally on the client system to the user, though not explicitly requested by the user, for the period when there was no other usable media to be displayed to them, and the potential consequent commercial opportunities which are therefore made feasible.

In another embodiment, previous to the above process, a suite of advertising material will have been downloaded to the client system through an interaction between a client on the client system and the network. These selection of adverts will be in accordance with an algorithm which has an element on the terminal side such that the displayed advert could be chosen in a rational manner. For instance including but not limited to
- on the basis of customer identity,
- on the basis of previously customer activity
- on the basis of the current customer request for the media
- on the basis of network bulletin or promotional information
- on the basis of interest expressed in other similar known user communities
- on the basis of user navigation and selection of desirable promotional material during the promotional period. For example, if the media object is a static image
   containing the current Top 10 UK Movies of the week displayed before streaming a movie news channel, the user can click a button to step through to the next static image which could be a list of the Top 10 US Movies of the week before the stream starts.

## Claims

1. A method for combined rendering of a first and a second digital media object on a client system, the client system being in communication with a server system over a network, the first media object being held on the server system for download to the client system in a data stream, the second media object being locally stored on the client system, the method comprising the steps:
a. receiving a user input relative to a first media object provided on the server system,
b. establishing a communications channel between the server system and the client system for transmitting the first media object from the server system to the client system,
c. accessing the media object on the server system,
d. transmission of the first media object representing data from the server system to the client system via the communications channel in a data stream,
e. storing the data in a stream buffer on the client system,
f. rendering the first media object on the client system when a predetermined amount of data has been transmitted into the buffer,
whereby the second media object is rendered on the client system after the user input is received.

2. A method according to claim 1, wherein the second media object is downloaded from a server system when a hypertext object comprising a link to the first media object is requested from the client system.

3. A method according to claim 1 or 2, wherein the user input in entered by a user pressing a button on an input device of the client system.

4. A method according to claim 1, 2 or 3, wherein the second media object is rendered immediately after the user input is received and at least while the communications channel is established.

5. A method according to claim 4, wherein the second media object is rendered while the first media object representing data is transmitted to the client system.

6. A method according to one of the foregoing claims, wherein the second media object is rendered when the data stream is interrupted.

7. A method according to one of the foregoing claims, wherein the second media object is a static advert.

8. A method according to one of claims1 to 6, wherein the second media object is a dynamic advert with audio and/ or video content.

9. A method according to one of the foregoing claims, wherein the second media object is rendered for a predetermined duration and wherein the duration can be determined.

10. A method according to one of the foregoing claims, wherein rendering of the second media object is terminated, broken or interrupted when enough data of the first media object is transmitted to the client system to enable rendering of the first media object at least for a few seconds.

11. A method according to claim 10, wherein rendering of the second media object is continued when rendering of the first media object is interrupted or after the rendering of the first media object has terminated.

12. A method according to one of the foregoing claims, wherein previous to the reception, of the user request, a suite of media objects is transmitted from at least one server system to the client system and is stored locally on the client system.

13. A method according to claim 12, wherein attributes are allocated to the media objects, the attributes especially having time expiry information and/ or information about a topic relative to the subject matter of the individual media object.

14. A method according to claim 12 or 13, wherein the second media object is selected from the suite of locally stored media objects on the basis of their duration, whereas the duration shall be that rendering of the advert is completed when the predetermined amount of data has been transmitted into the buffer.

15. A method according to claims 12 or 14, wherein the second media object is selected from the suite of locally stored media objects on the basis of a topic relative to the subject matter of the individual media object.

16. A method according to claims 12 to 15, wherein the second media object is selected from the suite of locally stored media objects on the basis of a time expiry information relative to the subject matter of the media object.

17. Method according to claims 12 to 16, wherein the second media object is selected from the suite of locally stored media objects on the basis of criteria deposited on the client system or a server system.

18. A method according to claims 13 to 17, wherein the media objects of the suite of locally stored media objects and their attributes are listed up in a schedule, whereas the schedule is searched for the selection of the second media object to be rendered.

19. A client system for combined rendering of a first and a second digital media object on a client system, the client system being in communication with a server system over a network, the first media object being held on the server system for download to the client system in a data stream, the second media object being locally stored on the client system in a storage means, the client system comprising:
a. means for receiving a user input relative to a first media object provided on the server system,
b. means for establishing a communications channel between the server system and the client system for transmitting the first media object from the server system to the client system,
c. means for accessing the media object on the server system,
d. means for transmitting the first media object representing data from the server system to the client system via the communications channel in a data stream,
e. a stream buffer for storing the data on the client system,
f. means for rendering the first media object on the client system when a predetermined amount of data has been transmitted into the buffer, and
g. means for rendering the second media object when the user input is received.

20. A client system according to claim 19, whereby it is a cellular mobile phone.

21. A computer program product for combined rendering of a first and a second digital media object on a client system, the client system being in communication with a server system over a network, the first media object being held on the server system for download to the client system in a data stream, the second media object being locally stored on the client system in a storage means, the computer program product comprising a computer program being stored in the storage means and comprising software means to perform the method according to one of the claims 1 to 18 when it is executed on the client system.
